# EUROPEAN PATENT APPLICATION

(11) **EP 4 670 511 A1**
(43) Date of publication of application: **31.12.2025**
(21) Application number: 24851310.3
(22) Date of filing: 14.03.2024
(51) Int. Cl.: A23L 11/00

(54) **METHOD FOR PRODUCING SOYBEAN-CONTAINING PROCESSED FOOD, SYSTEM FOR PRODUCING SOYBEAN-CONTAINING PROCESSED FOOD, AND SOYBEAN-CONTAINING PROCESSED FOOD**

(30) Priority: 10.08.2023 JP 2023130750
(71) Applicant: Taishi Food Inc., Aomori 039-0141 (JP)
(72) Inventor: IDOGAWA, Shiori, Oosaki-shi Miyagi 9896228 (JP)
(74) Representative: Page White Farrer
(86) International application number: PCT/JP2024/009932
(87) International publication number: WO 2025/032876

(57) **Abstract**

Provided is a method for producing a novel soybean-containing processed food with terrine-like (terrine de pate-like) appearance and eating quality made of soybeans as a raw material. The method is configured to comprise: a dough base preparation process P10 of preparing a dough base 1 that forms the basis of a soybean-containing processed food 10 of interest; a secondary material mixing process P20 of mixing a secondary material 2 with the dough base 1 obtained in the dough base preparation process P10; and an aftertreatment process P30 of subjecting a secondary material mixture 3 obtained by the secondary material mixing process P20 to aftertreatment, the aftertreatment process P30 comprising at least a heat treatment step P35 for the secondary material mixture 3, wherein in component composition of the dough base 1, a lipid content is less than a protein content, and a solid content derived from the dough base 1 that accounts for the resulting soybean-containing processed food 10 is 25% by weight or more; and the dough base preparation process P10 comprises a component separation step P15 of separating a coagulated component 04 resulting from coagulation treatment of soymilk 02 from a water-soluble component 06.

## Description

### [Technical Field]

The present invention relates to a method for producing a soybean-containing processed food, a soybean-containing processed food production system, and a soybean-containing processed food and particularly relates to, for example, a method for producing a soybean-containing processed food which can provide novel texture, eating quality, purposes, and the like using soybeans as a main raw material.

### [Background Art]

There are many long-established processed foods obtained using soybeans as a raw material, and new research and development, patent applications, and the like have been made in many cases for such processed foods. For example, Patent Literature 1, which will be described later, filed by the present applicant discloses an invention in which necessary components are extracted from soymilk and re-mixed at a component ratio suitable for each product, in order to solve the problem of production lines that must be established as different lines among products such as Tofu (soybean curd), Iri Tofu (scrambled Tofu), Aburaage (deep-fried Tofu), and Yuba (soymilk skin). This approach is thereby effective for production line unification, the resulting cost reduction, space saving, improved hygienic management, and promotion of new product development.

In addition, Patent Literature 2, which will be described later, discloses a method for producing a Tofu-like food with sea urchin flavor prepared in a paste state by elevating each of dietary fiber, lipid, and moisture contents. Patent Literature 3 discloses a method for producing a meat processed food-like soybean processed food which is produced using Japanese yams and defatted soybeans or soybean protein. Patent Literature 4 discloses a method for producing a soybean processed food having cheese-like texture by increasing a moisture content.

Foods that allow protein to be taken more easily than amorphous powdery forms include protein bars shaped into given forms such as wafer and crunch types. In the case of making such foods with soybeans as a raw material, soybeans are powdered, and after addition of water, secondary materials are added thereto, followed by baking to adjust a solid content to approximately 75 to 90%. The foods shaped into given forms also include terrine de pate, i.e., so-called terrine, which is prepared by filling ingredients into a mold or a container and cooking the ingredients by heating or the like. Processed foods such as terrine-like prepared foods or confectioneries are also provided in the market.

### [Citation List]

### [Patent Literature]

[Patent Literature 1] Japanese Patent No. 6598564 "Method for producing soybean processed food and soybean processed product production system" (by the present applicant)
[Patent Literature 2] Japanese Patent No. 7479708 "Method for producing soybean food in paste state or gel state"
[Patent Literature 3] Japanese Patent Laid-Open No. 2022-128426 "Soybean-containing processed food and method for producing same"
[Patent Literature 4] Japanese Patent No. 4928425 "Soybean processed food with cheese texture and method for producing same"

### [Summary of Invention]

### [Technical Problem]

As mentioned above, processed foods made of soybeans, which is a plant resource and a high-protein ingredient, as a raw material are under active development and research, and the introduction of new products into the market is hovering at high levels, also because of the diversification of consumers' needs. Providers are required to continuously provide new benefits to the market and customers. Examples of processed foods having such benefits include soybean processed foods having a lower level of lipid for the needs of health maintenance and health promotion trend, soybean processed foods more suitable for distribution at ordinary temperature or freezing by retort treatment in light of advantages in distribution or preservation, and terrine-like soybean processed foods in view of improvement in merchantability more adaptable to citizens' perspectives or senses.

Accordingly, an object of the present invention is to provide, in light of the circumstances of the conventional techniques, a technique of producing a novel soybean-containing processed food that can provide novel texture, eating quality, flavor, purposes, and the like, for example, a technique of producing a soybean processed food having a lower level of lipid, a soybean processed food more suitable for distribution at ordinary temperature or freezing by retort treatment, a soybean processed food excellent in productivity, or a soybean processed food suitable for a terrine-like commodity form or a soybean-containing processed food suitable therefor.

### [Solution to Problem]

The inventor of the present application has conducted diligent studies on the object. As a result, the inventor has devised a method for producing a solid processed food by molding, the method being based on a scheme of separating or extracting and reconstituting necessary components from a soybean raw material as disclosed in Patent Literature 1, and comprising appropriately mixing a secondary material therewith and performing optional homogenization treatment and heat treatment, through which the processed food has relatively highly viscous physical properties. For example, a seasoning, a food polysaccharide, a powdery plant protein, a vegetable powder, a powder for a confection, a fish powder, or a dairy product such as cheese or a milk powder can be appropriately used as the secondary material. Not only soymilk but soybean flour can be used as the raw material. A Tofu-like emulsion in a gel state has thereby been prepared and also confirmed to be able to produce a terrine-like food by the addition of a secondary material.

Furthermore, it has been able to be confirmed that a soybean processed food having a lower level of lipid, a soybean processed food more suitable for distribution at ordinary temperature or freezing by retort treatment, a soybean processed food excellent in productivity, a soybean processed food suitable for a terrine-like commodity form as mentioned above, a soybean processed food having novel and favorable texture, eating quality, and flavor, and a soybean processed food for a novel purpose such as prepared foods or confectioneries can be obtained according to the present invention. On the basis of these results, the present invention has been completed. Specifically, the invention claimed for a patent by the present application or at least the disclosed invention is as described below as means for solving the problems.
[1] A method for producing a soybean-containing processed food, comprising: a dough base preparation process of preparing a dough base that forms the basis of the soybean-containing processed food of interest; a secondary material mixing process of mixing a secondary material with the dough base obtained in the dough base preparation process; and an aftertreatment process of subjecting a secondary material mixture obtained by the secondary material mixing process to aftertreatment, the aftertreatment process comprising at least a heat treatment step for the secondary material mixture, wherein in component composition of the dough base, a lipid content is less than a protein content, and a solid content derived from the dough base that accounts for the resulting soybean-containing processed food is 25% by weight or more; and the dough base preparation process comprises a component separation step of separating a coagulated component resulting from soymilk coagulation treatment from a water-soluble component.
[2] The method for producing a soybean-containing processed food according to [1], wherein the dough base preparation process comprises: a selective component mixing step of, if necessary, mixing the water-soluble component with the coagulated component separated in the component separation step to obtain a component mixture; and a selective homogenization step of, if necessary, subjecting the coagulated component or the component mixture obtained by the selective component mixing step, if performed, to homogenization treatment.
[3] The method for producing a soybean-containing processed food according to [2], wherein in the selective component mixing step, the treatment is performed at a mixing ratio of 25% by weight or more and 100% by weight or less of the coagulated component and 0% by weight or more and 75% by weight or less of the water-soluble component such that a concentration of the coagulated component is a concentration suitable for obtaining the soybean-containing processed food of interest.
[4] A method for producing a soybean-containing processed food, comprising: a dough base preparation process of preparing a dough base that forms the basis of the soybean-containing processed food of interest; a secondary material mixing process of mixing a secondary material with the dough base obtained in the dough base preparation process; and an aftertreatment process of subjecting a secondary material mixture obtained by the secondary material mixing process to aftertreatment, the aftertreatment process comprising at least a heat treatment step for the secondary material mixture, wherein in component composition of the dough base, a lipid content is less than a protein content, and a solid content derived from the dough base that accounts for the resulting soybean-containing processed food is 25% by weight or more; and in the dough base preparation process, a Tofu-like emulsion resulting from water extraction of soybean flour is obtained as the dough base.
[5] The method for producing a soybean-containing processed food according to any of [1], [2], [3], and [4], wherein the heat treatment in the heat treatment step is any one of the following list <H>:
   <H> baking with an oven, baking with a convection oven, baking with a steam oven, heat treatment with a drum dryer, boiling treatment by filling into a container or a package, retort treatment by filling into a container or a package, and other heat treatments (except for the baking with an oven, the baking with a convection oven, the baking with a steam oven, the heat treatment with a drum dryer, the boiling treatment by filling into a container or a package, and the retort treatment by filling into a container or a package).
[6] The method for producing a soybean-containing processed food according to [5], wherein the aftertreatment process comprises a shaping step of shaping the secondary material mixture, and a shaped product obtained by the shaping step is subjected to the heat treatment in the heat treatment step.
[7] The method for producing a soybean-containing processed food according to [6], wherein the aftertreatment process comprises a selective secondary material mixture homogenization step of, if necessary, subjecting the secondary material mixture to homogenization treatment, and a homogenate obtained by the selective secondary material mixture homogenization step, if performed, is subjected to the shaping treatment in the shaping step.
[8] The method for producing a soybean-containing processed food according to any of [6] and [7], wherein the secondary material is any one or more of the following list <C>:
   <C> soybean protein, plant proteins (except for the soybean protein), seasonings, food polysaccharides, vegetable powders, fruit powders, powders for confections, fish powders, dairy products, and oils and fats.
[9] A soybean-containing processed food production system comprising: a dough base preparation unit that prepares a dough base that forms the basis of the soybean-containing processed food of interest; a secondary material mixing unit that mixes a secondary material with the dough base obtained in the dough base preparation unit; and an aftertreatment unit that subjects a secondary material mixture obtained by the secondary material mixing unit to aftertreatment, the aftertreatment unit comprising at least a heat treatment part for the secondary material mixture, wherein in the dough base preparation unit, the dough base is obtained in which a lipid content is less than a protein content, and a solid content derived from the dough base that accounts for the resulting soybean-containing processed food is 25% by weight or more.
[10] The soybean-containing processed food production system according to [9], wherein the dough base preparation unit comprises a component separation part that separates a coagulated component resulting from soymilk coagulation treatment from a water-soluble component.
[11] The soybean-containing processed food production system according to [10], wherein the dough base preparation unit comprises a selective component mixing part that, if necessary, mixes a water-soluble component with the coagulated component separated in the component separation part to obtain a component mixture.
[12] A soybean-containing processed food produced by a soybean processed product production system according to any of [9], [10], and [11].
[13] A soybean-containing processed food comprising a dough base made of soybeans as a raw material, and a secondary material mixed therewith, wherein in component composition of the dough base, a lipid content is less than a protein content, and a solid content derived from the dough base that accounts for the resulting soybean-containing processed food is 25% by weight or more; and the soybean-containing processed food is formed through heat treatment.
[14] The soybean-containing processed food according to any of [12] and [13], wherein the soybean-containing processed food is shaped into a terrine de pate-like specific shape.
[15] The soybean-containing processed food according to [14],
   wherein the soybean-containing processed food is any one of the following list <F>:
   <F> high-protein foods, prepared foods, confectioneries, and spreads.
[16] The soybean-containing processed food according to [15], wherein the soybean-containing processed food is a frozen food.

### [Advantageous Effects of Invention]

The method for producing a soybean-containing processed food, the soybean-containing processed food production system, and the soybean-containing processed food according to the present invention are configured as mentioned above and can therefore provide a solid soybean-containing processed food novel in terms of texture, eating quality, flavor, purposes, and the like. For example, a soybean processed food having a lower level of lipid, a soybean processed food more suitable for distribution at ordinary temperature or freezing by retort treatment, or a soybean processed food suitable for a terrine-like commodity form can be provided with excellent productivity.

### [Brief Description of Drawings]

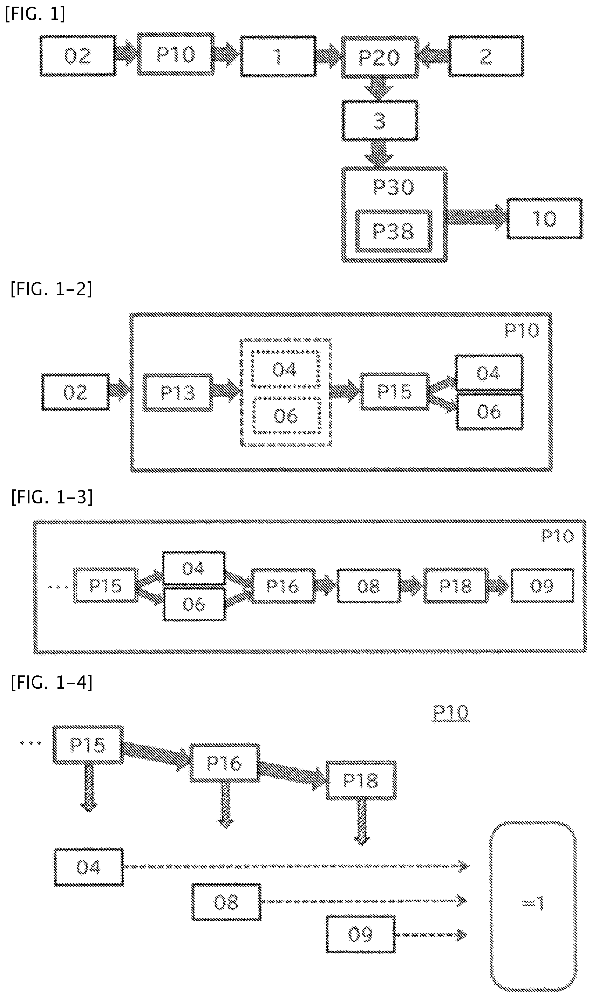

[Figure 1] Figure 1 is a flow diagram showing the basic configuration of the method for producing a soybean-containing processed food according to the present invention.
[Figure 1-2] Figure 1-2is a flow diagram showing a configuration as to one example of the dough base preparation process shown in Figure 1.
[Figure 1-3] Figure 1-3 is a flow diagram of a configuration example of the dough base preparation process related to the method for producing a soybean-containing processed food according to the present invention, which is shown in consideration of the viewpoint of component re-mixing and the like.
[Figure 1-4] Figure 1-4 is an illustrative diagram showing a material that may be used as a dough base in the method for producing a soybean-containing processed food according to the present invention shown in Figure 1.
[Figure 2] Figure 2 is a flow diagram showing the basic configuration of the method for producing a soybean-containing processed food according to the present invention using soybean flour as a raw material.
[Figure 3] Figure 3 is a flow diagram showing the configuration of the method for producing a soybean-containing processed food according to the present invention, comprising a shaping step in an aftertreatment process.
[Figure 3-2] Figure 3-2 is a flow diagram showing the major part configuration of the method for producing a soybean-containing processed food according to the present invention, comprising a homogenization step in the aftertreatment process.
[Figure 3-3] Figure 3-3 is an illustrative diagram showing a material that may be subjected to a heat treatment step in the method for producing a soybean-containing processed food according to the present invention shown in Figure 3.

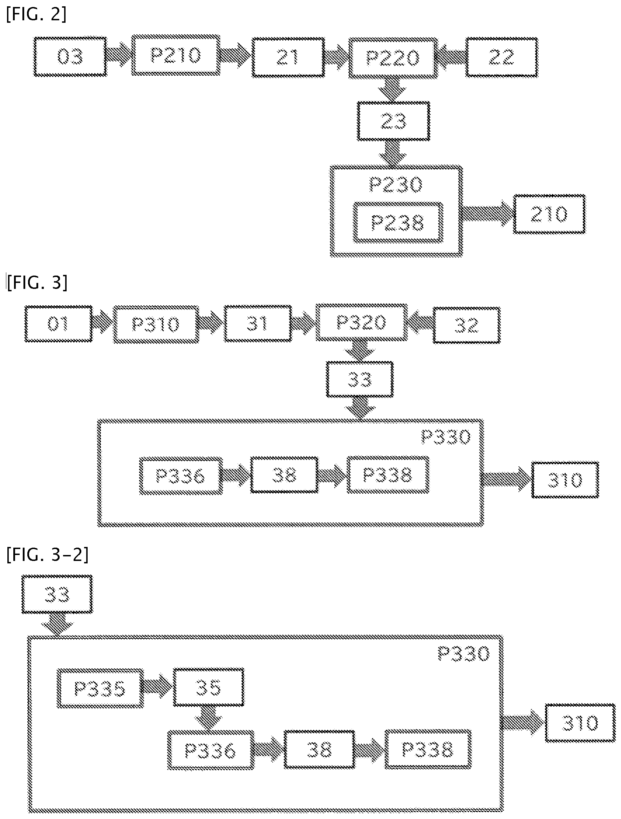

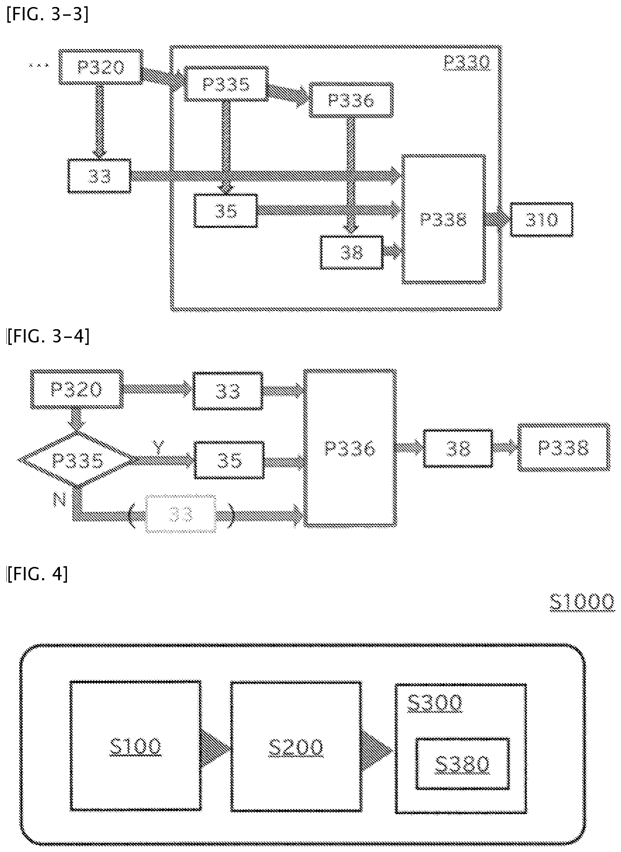

[Figure 3-4] Figure 3-4 is the second illustrative diagram showing a material that may be subjected to a heat treatment step in the method for producing a soybean-containing processed food according to the present invention shown in Figure 3.
[Figure 4] Figure 4 is a conceptual diagram showing the basic configuration of the soybean-containing processed food production system of the present invention.

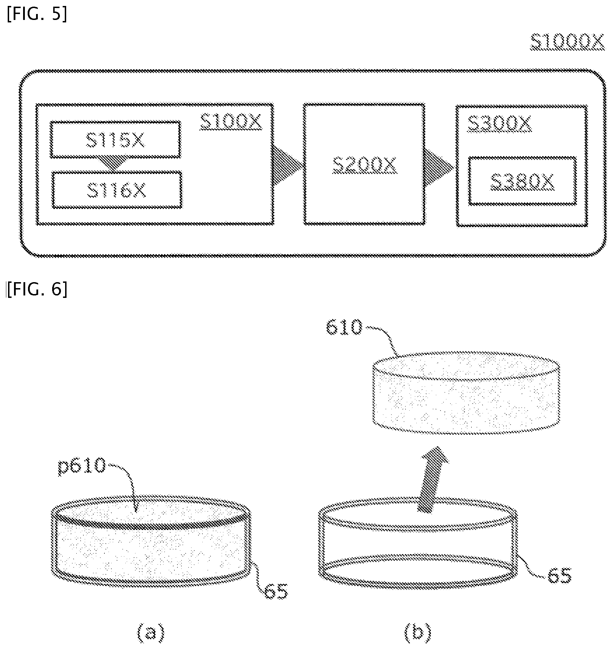

[Figure 5] Figure 5 is a conceptual diagram showing the configuration of the soybean-containing processed food production system of the present invention using soymilk as a raw material.
[Figure 6] Figure 6 is an illustrative diagram conceptually showing the shape formation of the soybean-containing processed food of the present invention.

### [Description of Embodiments]

Hereinafter, the present invention will be described in detail with reference to the drawings.

Figure 1 is a flow diagram showing the basic configuration of the method for producing a soybean-containing processed food according to the present invention.Figure 1-2 is a flow diagram showing a configuration as to one example of the dough base preparation process shown in Figure 1. As shown in these drawings, the flow of the present production method is basically configured to comprise: a dough base preparation process P10 of preparing a dough base 1 that forms the basis of a soybean-containing processed food 10 of interest; a secondary material mixing process P20 of mixing a secondary material 2 with the dough base 1 obtained in the dough base preparation process P10; and an aftertreatment process P30 of subjecting a secondary material mixture 3 obtained by the secondary material mixing process P20 to aftertreatment, the aftertreatment process P30 comprising at least a heat treatment step P38 for the secondary material mixture 3.

In component composition of the dough base 1 subjected to the dough base preparation process P10, a lipid content is less than a protein content, and a solid content derived from the dough base 1 that accounts for the resulting soybean-containing processed food 10 is 25% by weight or more; and, as shown in Figure 1-2, the dough base preparation process P10 is mainly configured to comprise a component separation step P15 of separating a coagulated component 04 resulting from coagulation treatment of a raw material soymilk 02 in a coagulation treatment step P13 from a water-soluble component 06.

According to the present method for producing a soybean-containing processed food thus configured, first, a dough base 1 that forms the basis of the soybean-containing processed food 10 of interest is prepared in the dough base preparation process P10. As shown in Figure 1-2, soymilk 02 is used as a raw material herein. Specifically, in the preparation process, soymilk 02 is subjected to coagulation treatment in the coagulation treatment step P13 to obtain a coagulated component 04 and a water-soluble component 06; and subsequently, the coagulated component 04 is separated from the water-soluble component 06 in the component separation step P15.

Methods conventionally known in the production of Tofu or the like can be appropriately used, for example, the addition of a coagulant as a coagulation treatment method in the coagulation treatment step P13, and centrifugation as separation treatment in the component separation step P15. How to use the coagulated component 04 and the water-soluble component 06 thus separated will be separately mentioned later with reference to Figure 1-3.

In the component composition of the dough base 1 finally obtained in the dough base preparation process P10 in the method for producing a soybean-containing processed food according to the present invention, a lipid content is set to be less than a protein content. Specifically, preparation that attains such component composition is performed in the dough base preparation process P10.

The dough base 1 obtained in the dough base preparation process P10 is next subjected to the secondary material mixing process P20 where a secondary material 2 is mixed with the dough base 1 to obtain a secondary material mixture 3. The range of the secondary material 2 that may be mixed therewith is wide and will be specifically mentioned later. The obtained secondary material mixture 3 is next subjected to the aftertreatment process P30 where the secondary material mixture 3 is subjected to aftertreatment, which comprises at least a heat treatment step P38 for the secondary material mixture 3.

In short, the secondary material mixture 3 is heat-treated by an appropriate heating method to finally obtain the soybean-containing processed food 10 of interest. A feature of the production method of the present invention is that a solid content derived from the dough base 1 that accounts for the soybean-containing processed food 10 thus obtained is 25% by weight or more. A more desirable ratio of the solid content of the resulting soybean-containing processed food 10 is 30 to 75% by weight.

The applicant has previously disclosed techniques of producing a soybean processed product by separating a coagulated component resulting from coagulation treatment of a starting material soymilk from a water-soluble component and re-mixing these two components at a mixing ratio appropriate for a product of interest (Japanese Patent Nos. 6541509, 6598564, 6605258, and 6757126). In these production methods, the re-mixing ratio attains, for example, a solid content on the order of 14% by weight for hard Tofu used as the product of interest, a solid content on the order of 18% by weight for Iri Tofu, a solid content on the order of 25% by weight for a film-shaped soybean processed food such as Yuba, a crepe-like food, or a laver-like food, and a solid content on the order of 30% for a meat-like soybean processed food such as a hamburger pate-like food, a minced fish-like food, or a scrambled egg-like food.

Meanwhile, an object of the present invention is to provide a terrine-like commodity form as a final product, as mentioned above. Specifically, such a commodity form is a soybean-containing processed food shaped into a terrine de pate-like specific shape, regardless of a purpose such as prepared foods or confectioneries. Such a pate-like form, i.e., a so-called terrine-like form, also includes commodity forms having a more definite shape, such as protein bars. A preferred numeric range of the solid content in a final product in a terrine-like form is 30 to 75% by weight, and the re-mixing ratio between the coagulated component 04 and the water-soluble component 06, for example, after coagulation treatment of the soymilk 02 can be determined depending on this ratio.

Figure 1-3 is a flow diagram of a configuration example of the dough base preparation process related to the method for producing a soybean-containing processed food according to the present invention, which is shown in consideration of the viewpoint of component re-mixing and the like. As shown in the drawing, the method for producing a soybean-containing processed food according to the present invention using soymilk 02 as a raw material can be configured to have a selective component mixing step P16 in the dough base preparation process P10. This step P16 is of, if necessary, re-mixing the water-soluble component 06 with the coagulated component 04 separated from the water-soluble component 06 in the component separation step P15 to obtain a component mixture 08. The term "if necessary" means that the re-mixing may not be performed if it is not necessary for obtaining the specification of a final product. In the case of re-mixing the coagulated component 04 and the water-soluble component 06, the mixing ratio therebetween can be appropriately designed depending on the specification of a final product.

In the present flow, as shown in the drawing, even a selective homogenization step P18 can be established in the configuration. This step P18 is of, if necessary, subjecting the coagulated component 04 or the component mixture 08 obtained by component re-mixing in the selective component mixing step P16, if performed, to homogenization treatment to obtain a dough base-level homogenate 09. The term "if necessary" means that the homogenization treatment may not be performed if it is not necessary for obtaining the specification of a final product. A specific method for the homogenization treatment can be appropriately designed depending on the specification of a final product.

Figure 1-4 is an illustrative diagram showing a material that may be used as a dough base in the method for producing a soybean-containing processed food according to the present invention shown in Figure 1. As shown in the drawing, a plurality of materials may be used as the dough base 1 obtained in the dough base preparation process P10 in the present method for producing a soybean-containing processed food using soymilk 02 as a raw material. Specifically, any of the coagulated component 04 obtained in the component separation step P15, the component mixture 08 obtained in the selective component mixing step P16, and the homogenate 09 at the time of dough base preparation obtained in the selective homogenization step P18 can be used as the dough base 1 and subjected to the subsequent process.

The selective component mixing step P16 can be configured to comprise re-mixing treatment that is performed at a mixing ratio of 25% by weight or more and 100% by weight or less of the coagulated component and 0% by weight or more and 75% by weight or less of the water-soluble component such that the concentration of the coagulated component 04 is a concentration suitable for obtaining the soybean-containing processed food of interest. This re-mixing ratio can favorably produce the soybean-containing processed food of the present invention having the solid content of 30 to 75% by weight mentioned above as a more desirable ratio.

Figure 2 is a flow diagram showing the basic configuration of the method for producing a soybean-containing processed food according to the present invention using soybean flour as a raw material. As shown in the drawing, the present method for producing a soybean-containing processed food using soybean flour 03 as a raw material has the following item in common with the production method of the present invention using soymilk 02 as a raw material shown in Figure 1, etc.: the basic configuration comprising: a dough base preparation process P210 of preparing a dough base 21 that forms the basis of a soybean-containing processed food 210 of interest; a secondary material mixing process P220 of mixing a secondary material 22 with the dough base 21 obtained in the dough base preparation process P210; and an aftertreatment process P230 of subjecting a secondary material mixture 23 obtained by the secondary material mixing process P220 to aftertreatment, the aftertreatment process P230 comprising at least a heat treatment step P238 for the secondary material mixture 23, wherein in component composition of the dough base 21, a lipid content is less than a protein content, and a solid content derived from the dough base 21 that accounts for the resulting soybean-containing processed food 210 is 25% by weight or more. The present method differs therefrom in that in the dough base preparation process P210, a Tofu-like emulsion resulting from water extraction of soybean flour 03 is obtained as the dough base 21.

Specifically, each of the processes P220 and P230 is performed with the same variations as in the production method using soymilk 02 as a raw material described in Figure 1, 1-3, or 1-4 except that a Tofu-like emulsion resulting from water extraction of soybean flour 03 is used as the dough base 21 in the dough base preparation process P210 and subjected to each subsequent process. As mentioned above, a Tofu-like emulsion in a sol state is prepared from soybean flour 03, and a secondary material is added thereto, whereby the soybean-containing processed food 210 can be obtained, and a terrine-like final product can also be obtained, as in the case of the soymilk raw material shown in Figure 1, etc. A feature showing, for example, component separation based on the coagulation treatment of soymilk 02 described with reference to Figure 1-3 is absent in the present flow with soybean flour 03 as a raw material, as a matter of course.

The heat treatment to be performed in the heat treatment step in the aftertreatment process can be performed using various heating schemes and heating conditions, including baking treatment with an oven, a convection oven, or a steam oven, heat treatment with a drum dryer, boiling treatment or retort treatment by filling into a container or a package, or other treatments, regardless of whether the raw material is soymilk 02 or is soybean flour 03, as long as the desired ratio of the solid content can be achieved by reducing the moisture content of a final product. In the present invention, the heat treatment step by any of these methods is essential for the aftertreatment process.

If this step is not sufficiently performed, the resulting final product is in a paste state or a slurry state, and a terrine-like processed food with a high solid content ratio intended as a main form of the final product by the present invention cannot be obtained. Thus, at least a degree that attains such a high solid content ratio in the final product is important as the degree of heating in the heat treatment, depending on a specific treatment method. For example, in boiling treatment by filling into a container or a package, the resulting final product is in a paste state if the degree thereof is low. Therefore, sufficient boiling treatment should be performed. The high solid content ratio in the final product soybean-containing processed food is also meaningful for obtaining a commodity more suitable for distribution.

Figure 3 is a flow diagram showing the configuration of the method for producing a soybean-containing processed food according to the present invention, comprising a shaping step in an aftertreatment process. As shown in the drawing, the present method for producing a soybean-containing processed food can be configured to comprise a shaping step P336 of shaping a secondary material mixture 33 obtained through a dough base preparation process P310 and a secondary material mixing process P320, in an aftertreatment process P330 to which the secondary material mixture 33 is subjected, regardless of whether the material for use as a soybean-containing processed food raw material 01 is soymilk or is soybean flour.

According to the present flow of this configuration, the secondary material mixture 33 is subjected to the shaping step P336 in the aftertreatment process P330 to obtain a shaped product 38. Shaping means suitable for forming a form to be imparted to the shaped product 38, such as a molding processing machine or a filling machine, can be appropriately used in shaping treatment in the shaping step P336. The shaped product 38 is subsequently subjected to a heat treatment step P338 where heat treatment is performed to obtain a soybean-containing processed food 310 shaped into a form to be imparted thereto.

Figure 3-2 is a flow diagram showing the major part configuration of the method for producing a soybean-containing processed food according to the present invention, comprising a homogenization step in the aftertreatment process. As shown in the drawing, the present method for producing a soybean-containing processed food can be configured to comprise a selective secondary material mixture homogenization step P335 of, if necessary, subjecting a secondary material mixture 33 obtained through the dough base preparation process and the secondary material mixing process to homogenization treatment, in the aftertreatment process P330 to which the secondary material mixture 33 is subjected, regardless of whether the material for use as a soybean-containing processed food raw material 01 is soymilk or is soybean flour.

According to the present flow of this configuration, the secondary material mixture 33 is subjected to the selective secondary material mixture homogenization step P335 in the aftertreatment process P330 where homogenization treatment is performed if necessary to obtain a homogenate 35. Then, the homogenate 35 is subjected to the shaping treatment in the shaping step P336 to obtain a shaped product 38. The shaped product 38 is subsequently subjected to the heat treatment step P338 where heat treatment is performed to obtain a soybean-containing processed food 310 shaped into a form to be imparted thereto.

Figure 3-3 is an illustrative diagram showing a material that may be subjected to a heat treatment step in the method for producing a soybean-containing processed food according to the present invention shown in Figure 3. As shown in the drawing, a plurality of materials may be used as the material to be subjected to the heat treatment step P338. Specifically, any of the secondary material mixture 33 obtained in the secondary material mixing process P320, the homogenate 35 obtained in the selective secondary material mixture homogenization step P335, and the shaped product 38 obtained in the shaping step P336 may be used as the material to be subjected to the heat treatment step P338. However, in the present invention, particularly, a terrine-like product form is mentioned as a main object of the present invention. Thus, a configuration for which the shaping step P336 is essential is more desirable. Description will be added from this viewpoint.

Figure 3-4 is the second illustrative diagram showing a material that may be subjected to a heat treatment step in the method for producing a soybean-containing processed food according to the present invention shown in Figure 3. This drawing is premised on the shaping step being essential. As shown in the drawing, any of the secondary material mixture 33 obtained by the secondary material mixing process P320 and the homogenate 35 obtained in the homogenization treatment, if performed, in the selective secondary material mixture homogenization step P335 (indicated by the arrow "Y" in the drawing) is inevitably subjected to the shaping treatment in the shaping step P336 to prepare a shaped product 38, before being subjected to the heat treatment step P338. When no homogenization treatment is selected in the selective secondary material mixture homogenization step P335 (indicated by the arrow "N" in the drawing), the material to be subjected to the shaping step P336 is the secondary material mixture 33.

The secondary material for use in the method for producing a soybean-containing processed food according to the present invention is not particularly limited and can include a wide range of materials. Particularly, any one of or an appropriate combination of any two or more of soybean protein, plant proteins other than the soybean protein, seasonings, food polysaccharides, vegetable powders, fruit powders, powders for confections, fish powders, dairy products (cheese, milk powders, etc.), and oils and fats can be preferably used as the secondary material. The final product soybean-containing processed food of interest has a high solid content ratio and is highly viscous. Therefore, use of an apparatus with strong stirring power, such as a food processor, a cutter mixer, or a shear mixer, is desirable for production.

Figure 4 is a conceptual diagram showing the basic configuration of the soybean-containing processed food production system of the present invention. As shown in the drawing, the present soybean-containing processed food production system S1000 is mainly configured to comprise: a dough base preparation unit S100 which prepares a dough base that forms the basis of the soybean-containing processed food of interest; a secondary material mixing unit S200 which mixes a secondary material with the dough base obtained in the dough base preparation unit S100; and an aftertreatment unit S300 which subjects a secondary material mixture obtained by the secondary material mixing unit S200 to aftertreatment, the aftertreatment unit S300 comprising at least a heat treatment part S380 for the secondary material mixture, wherein the dough base is obtained in which a lipid content is less than a protein content, and a solid content derived from the dough base that accounts for the resulting soybean-containing processed food as a final product is 25% by weight or more.

In the soybean-containing processed food production system S1000 of the present invention thus configured, first, a dough base that forms the basis of the soybean-containing processed food of interest is prepared in the dough base preparation unit S100. The dough base prepared here is a material having a nature in which a lipid content is less than a protein content, and a solid content derived from the dough base that accounts for the resulting soybean-containing processed food as a final product is 25% by weight or more. More desirably, the dough base is a material having a nature in which a solid content derived from the dough base that accounts for the resulting soybean-containing processed food as a final product is 30% by weight or more and 75% by weight or less.

The dough base is mixed with a secondary material in the secondary material mixing unit S200 to prepare a secondary material mixture. Various materials can be used as the secondary material, depending on the purpose or the like of the final product, as in the aforementioned method for producing a soybean-containing processed food according to the present invention. The obtained secondary material mixture is subjected to aftertreatment in the aftertreatment unit S300 to obtain a final product soybean-containing processed food. In the aftertreatment unit S300, the secondary material mixture is at least heat-treated in the heat treatment part S380. The scheme of the heat treatment in the heat treatment part S380 can be an appropriate conventionally known scheme, as in the aforementioned method for producing a soybean-containing processed food according to the present invention.

Figure 5 is a conceptual diagram showing the configuration of the soybean-containing processed food production system of the present invention using soymilk as a raw material. As shown in the drawing, the present soybean-containing processed food production system S1000X can be configured to comprise, in addition to each constituent described with reference to Figure 4, a component separation part S115X which separates a coagulated component resulting from soymilk coagulation treatment from a water-soluble component, in the dough base preparation unit S100X. Specifically, the present soybean-containing processed food production system S1000X employs soymilk as a production raw material, and in the dough base preparation unit S100X, a coagulated component resulting from soymilk coagulation treatment is separated from water-soluble component in the component separation part S115X.

The dough base obtained through this soymilk component separation in the component separation part S115X is mixed with a secondary material in a secondary material mixing unit S200X to prepare a secondary material mixture. The secondary material mixture undergoes at least aftertreatment by heat treatment in the heat treatment part S380 in an aftertreatment unit S300X to obtain a final product soybean-containing processed food. In the dough base preparation unit S100X, the coagulated component separated in the component separation part S115X can be output as the dough base, and dough base composition other than this is also possible.

Specifically, as shown in the drawing, the dough base preparation unit S100X can be configured to have a selective component mixing part S116X on the side downstream of the component separation part S115X, and the separated components can thereby be re-mixed at an appropriate ratio. Specifically, the selective component mixing part S116X has a function of, if necessary, mixing the water-soluble component with the coagulated component separated in the component separation part S115X to obtain a component mixture resulting from re-mixing of both the components. The term "if necessary" means that the re-mixing treatment may not be performed if it is not necessary for obtaining the specification of a final product. A specific method and mixing ratio for the re-mixing treatment can be appropriately designed depending on the specification of a final product.

The soybean-containing processed food itself produced by the soybean processed product production system S1000, etc. having any of the configurations described above is included in the scope of the present invention. The production means is not limited to the soybean processed product production system S1000, etc. of the present invention. A soybean-containing processed food comprising a dough base made of soybean as a raw material, and a secondary material mixed therewith, wherein in component composition of the dough base, a lipid content is less than a protein content, and a solid content derived from the dough base that accounts for the resulting soybean-containing processed food is 25% by weight or more; and the soybean-containing processed food is formed through heat treatment, is included in the scope of the present invention.

Figure 6 is an illustrative diagram conceptually showing the shape formation of the soybean-containing processed food of the present invention. As shown in the drawing, the present soybean-containing processed food 610 is obtained by filling the soybean-containing processed food into an appropriate mold structure 65 having a specific shape for attaining shaping to obtain a specific form as a soybean-containing processed food p610 before removal from the mold structure ((a) in the drawing), and finally removing it from the mold structure 65 to obtain a soybean-containing processed food 610 shaped into a terrine de pate-like specific shape ((b) in the drawing).

The soybean-containing processed food of the present invention which is produced with a solid content of 25% by weight or more, more desirably 30% by weight and 75% by weight or less, has a low level of lipid owing to use of a natural emulsion, and is a nearly natural food is not limited by its purpose. The soybean-containing processed food of the present invention can be preferably used as, for example, a high-protein food, a prepared food, or a confectionery and can also be used as a spread food within the range of a low solid content ratio. The present soybean-containing processed food has a large solid content and a small moisture and is therefore also suitable for distribution at ordinary temperature by retort treatment and production, distribution, and sales as a frozen food, regardless of purposes.

### [Examples]

Hereinafter, Examples of the present invention will be described. However, the present invention is not limited by these Examples. The term "%" refers to % by weight.

### <1 Production of soybean processed product composition (= dough base)>

Soymilk produced on the basis of a conventional method in a Tofu factory was subjected to tests.

The present soymilk was obtained by using Canadian soybeans, dipping the soybeans overnight, then grinding the soybeans in a grinder while adding water, directly heating the resultant in a cooker, and separating Okara (soy pulp) in a screw press apparatus. The solid content of the soymilk was adjusted to 10% by the addition of water, and the soymilk was heated to 80°C in a hot water bath.

17.5 mL of a 10% aqueous solution of magnesium chloride hexahydrate (manufactured by Kanto Chemical Co., Inc.) was added to 500 g of the soymilk, mixed using a rubber spatula, and left standing for 10 minutes. A coagulated product was separated from an aqueous solution at 5,000 rpm with a desktop centrifuge (H-112, Kokusan Co., Ltd.). The separated coagulated product had a solid content of 24%.

### <2 Method for measuring physical property (viscosity)>

In viscosity measurement, a sample before heating was measured under a condition of 25°C. The measurement employed a rheometer (Anton Paar Japan K.K., MCR-302e), and the plunger used was a parallel plate spindle having a diameter of 12 mm (Anton Paar Japan K.K., PP12). In order to obtain a rheology profile using RheoCompass software, the rheometer was set to an oscillation mode with an angular frequency of 10 (1/s), and 25 data points were collected while a strain increased from 0.01% to 100% at a log scale with a gap set to 3 mm. A shear strain (%), a shear stress (Pa), a storage modulus (Pa), a loss modulus (Pa), a loss tangent (-), a torque (µNm), a complex viscosity (Pa·s), and a normal force (N) were recorded. A complex viscosity (Pa·s) at a shear strain of 0.1% was also recorded.

### <3 Method for measuring physical property (fracture stress)>

The fracture stress was measured by a penetration test at three locations as to a sample that was cut into a thickness of 1.5 cm and incubated at 25°C. The measurement employed a rheometer (Sun Scientific Co., Ltd., CR-500DX), and the plunger used was in a round shape having a diameter of 10 mm. A penetration rate was set to 1.0 mm/min, and an average value of first peaks of load was evaluated as the fracture stress.

### <4 Comparative Examples>

### Comparative Example 1 (plain)

Only 100 g of the dough base was homogeneously dispersed with a food processer (MK-K48P, Panasonic Holdings Corp.) without the use of a secondary material. This dispersion was filled into a container and heat-treated for 20 minutes in a temperature-constant water bath of 90°C to obtain a soybean processed product (soybean-containing processed food), which was used in Comparative Example 1.

### Comparative Example 2 (low-protein)

97.5 g of the dough base and 2.5 g of 90% soybean protein (Bio Actives Japan Corp.) as a secondary material were weighed and homogeneously dispersed with a food processer (MK-K48P, Panasonic Holdings Corp.). The obtained mixture was filled into a container and heat-treated for 20 minutes in a temperature-constant water bath of 90°C to obtain a soybean processed product, which was used in Comparative Example 2.

### <5 Examples_high-nutrient food>

### Example 1 (medium-protein)

94 g of the dough base and 6 g of 90% soybean protein (Bio Actives Japan Corp.) as a secondary material were weighed and homogeneously dispersed with a food processer (MK-K48P, Panasonic Holdings Corp.). The obtained mixture was filled into a container and heat-treated for 20 minutes in a temperature-constant water bath of 90°C to obtain a soybean processed product, which was used in Example 1.

### Example 2 (high-protein)

89 g of the dough base and 11 g of 90% soybean protein (Bio Actives Japan Corp.) as a secondary material were weighed and homogeneously dispersed with a food processer (MK-K48P, Panasonic Holdings Corp.). The obtained mixture was filled into a container and heat-treated for 20 minutes in a temperature-constant water bath of 90°C to obtain a soybean processed product, which was used in Example 2.

### Example 3 (high-protein retort)

89 g of the dough base and 11 g of 90% soybean protein (Bio Actives Japan Corp.) as a secondary material were weighed and homogeneously dispersed with a food processer (MK-K48P, Panasonic Holdings Corp.). The obtained mixture was filled into a container and retort-treated (Hirayama Manufacturing Corp.) at 121°C for 20 minutes to obtain a soybean processed product, which was used in Example 3.

### Example 4 (ultrahigh-protein)

84 g of the dough base and 16 g of 90% soybean protein (Bio Actives Japan Corp.) as a secondary material were weighed and homogeneously dispersed with a food processer (MK-K48P, Panasonic Holdings Corp.). The obtained mixture was filled into a container and heat-treated for 20 minutes in a temperature-constant water bath of 90°C to obtain a soybean processed product, which was used in Example 4.

### <6 Examples_prepared food>

### Example 5 (Komatsuna (Japanese mustard spinach) spread/low temperature)

90 g of the dough base and 8 g of a Komatsuna powder (Mikasa Sangyo Co., Ltd.), 1 g of a consomme powder, and 1 g of an edible oil as secondary materials were weighed and homogeneously dispersed with a food processer (MK-K48P, Panasonic Holdings Corp.). The obtained mixture was filled into a container and heat-treated for 90 minutes in a temperature-constant water bath of 65°C to obtain a soybean processed product, which was used in Example 5.

### Example 6 (Komatsuna terrine/high temperature)

90 g of the dough base and 8 g of a Komatsuna powder (Mikasa Sangyo Co., Ltd.), 1 g of a consomme powder, and 1 g of an edible oil as secondary materials were weighed and homogeneously dispersed with a food processer (MK-K48P, Panasonic Holdings Corp.). The obtained mixture was filled into a container and heat-treated for 20 minutes in a temperature-constant water bath of 90°C to obtain a soybean processed product, which was used in Example 6.

### <7 Examples_confectioneries>

### Example 7 (Matcha (powdered green tea) terrine/boiled)

72.5 g of the dough base and 20 g of sugar, 5 g of processed starch (Showa Sangyo Co., Ltd.), and 2.5 g of a Matcha powder as secondary materials were weighed and homogeneously dispersed with a food processer (MK-K48P, Panasonic Holdings Corp.). The obtained mixture was filled into a container and heat-treated for 20 minutes in a temperature-constant water bath of 90°C to obtain a soybean processed product, which was used in Example 7.

### Example 8 (Matcha terrine/retort)

72.5 g of the dough base and 20 g of sugar, 5 g of processed starch (Showa Sangyo Co., Ltd.), and 2.5 g of a Matcha powder as secondary materials were weighed and homogeneously dispersed with a food processer (MK-K48P, Panasonic Holdings Corp.). The obtained mixture was filled into a container and retort-treated (Hirayama Manufacturing Corp.) at 121°C for 20 minutes to obtain a soybean processed product, which was used in Example 8.

### <8 Measurement and evaluation methods>

### a Moisture %

Measurement was performed by a drying method by heating at ordinary pressure at 105°C.

### b Texture

The texture was assessed by sensory evaluation by panelists using the following criteria, and the acceptance line was equal to or greater than "good".
"Excellent" indicated by double circle
"Good" indicated by circle
"Poor" indicated by X-mark

### c Complex viscosity Pa·s before heating

The complex viscosity (Pa·s) at a shear strain of 0.1% was recorded.

### d Fracture stress gf/cm² after heating

The fracture stress in a penetration test using a rheometer was measured.

### e Protein %

The protein content was measured with a total nitrogen analysis apparatus (Sumika Chemical Analysis Service, Ltd., SUMIGRAPH(R) NC-220F) based on a combustion method and calculated using a nitrogen conversion factor of 5.71.

### f Lipid %

The lipid content was measured by extracting lipid by a chloroform-methanol mixed solvent extraction method.

### g Texture after freezing and thawing

Freezing was performed by slow freezing in a freezer (Sibata Scientific Technology Ltd.) of -20°C, and a frozen product was stored for 24 hours, then thawed at ordinary temperature, and subjected to sensory evaluation. The texture was assessed by sensory evaluation by panelists using the following criteria, and the acceptance line was equal to or greater than "good".

"Excellent" indicated by double circle: The texture before freezing was maintained.

"Good" indicated by circle: The texture before freezing was maintained, though inferior to "Excellent".

"Poor" indicated by X-mark: The texture before freezing was lost.

### <9 Results and discussion>

Results of each measurement and evaluation in Examples 1 to 8 and Comparative Examples 1 and 2 are summarized in Table 1.

**[Table 1]**

| | Measurement and evaluation items | Comparative Example 1 | Comparative Example 2 | Example 1 | Example 2 | Example 3 | Example 4 | Example 5 | Example 6 | Example 7 | Example 8 |
|---|---|---|---|---|---|---|---|---|---|---|---|
| a | Moisture % | 75.8 | 74.0 | 71.4 | 67.8 | 67.8 | 64.1 | 68.6 | 68.6 | 55.9 | 55.9 |
| b | Texture | ○ | ○ | ○ | ○ | ⊚ | ○ | ○ | ○ | ○ | ⊚ |
| c | Complex viscosity Pa·s before heating | 976 | 1306 | 1570 | 2355 | 2355 | 5511 | 2715 | 2715 | 1028 | 1028 |
| d | Fracture stress gf/cm² after heating | - | 298 | 628 | 1004 | 2301 | 2178 | - | 497 | 490 | 624 |
| e | Protein % | 14.2 | 15.7 | 17.1 | 20.2 | 20.2 | 23.3 | 14.7 | 14.7 | 10.9 | 10.9 |
| f | Lipid % | 6.3 | 6.1 | 5.9 | 5.6 | 5.6 | 5.3 | 7.2 | 7.2 | 4.7 | 4.7 |
| 9 | Texture after freezing and thawing | × | × | ○ | ○ | ⊚ | ○ | - | ⊚ | ○ | ⊚ |

The difference in production conditions between Example 1 (medium-protein) and Comparative Example 1 (plain) was the presence or absence of the secondary material soybean protein. The difference in production conditions between Example 1 (medium-protein) and Comparative Example 2 (low-protein) was the amount of the secondary material soybean protein added. As a result, the texture after freezing and thawing was impaired in Comparative Example 1 having no addition of the secondary material and Comparative Example 2 having a small amount thereof, whereas this was maintained in Example 1 in which a soybean processed product (soybean-containing processed food) having good quality was obtained. In the case of using a plant protein (at least the case of using soybean protein), the amount of the secondary material added was presumed to be preferably set to approximately 5% or more of the whole.

The difference in production conditions between Example 1 (medium-protein) and Example 2 (high-protein) was the amount of the secondary material soybean protein added. As a result, the texture after freezing and thawing was also maintained in Example 2 having an added amount elevated to approximately 10% of the whole in which a soybean processed product having good quality was obtained. Example 2 was able to reduce the lipid content while elevating the protein content, and the obtained results were more conformed to the low-lipid trend of foods.

The difference in production conditions between Example 2 (high-protein) and Example 3 (high-protein retort) was the method and temperature of the heat treatment. The former was boiling treatment at 90°C, and the latter was retort treatment at 121°C. As a result, in Example 3 with the heat treatment performed at a higher temperature, the obtained soybean processed product had very good texture, furthermore the texture after freezing and thawing was maintained more favorably than Example 2, and a soybean processed product having excellent quality was obtained.

In Example 4 (ultrahigh-protein), the amount of the secondary material soybean protein added was elevated to more than 15% of the whole, though the production conditions were the same as in Examples 1 and 2. In this Example as well, the texture after freezing and thawing was maintained, and a soybean processed product having good quality was obtained. Example 4 was able to further reduce the lipid content while further elevating the protein content, and the obtained results were more conformed to the low-lipid trend of foods.

Example 5 (Komatsuna spread/low temperature) and Example 6 (Komatsuna terrine/high temperature) both provided a soybean processed product as a prepared food using a Komatsuna powder and other secondary materials and however, differed in heat treatment temperature. The former was 65°C, and the latter was 90°C. As a result, in Example 5 involving heating at a lower temperature, a soybean processed product (soybean-containing processed food) in a spread food form was obtained. In Example 5, the freezing and thawing test was not conducted.

On the other hand, in Example 6 involving heating at a higher temperature, a terrine-like soybean processed product having a large solid content was obtained. The texture after freezing and thawing was also favorably maintained, and a soybean processed product having excellent quality was obtained.

Example 7 (Matcha terrine/boiled) and Example 8 (Matcha terrine/retort) both provided a soybean processed product as a confectionery using a Matcha powder, a sweetener, and other secondary materials and however, differed in heat treatment method and temperature. The former was boiling treatment at 90°C, and the latter was retort treatment at 121°C. As a result, in both the cases, favorable texture and an effect of maintaining the texture after freezing and thawing were confirmed, and a soybean processed product having good quality was obtained. Particularly, excellent results were obtained in Example 8 with the heat treatment performed at a higher temperature.

### [Industrial Applicability]

The method for producing a soybean-containing processed food, the soybean-containing processed food production system, and the soybean-containing processed food according to the present invention can provide a solid soybean-containing processed food novel in terms of texture, eating quality, flavor, purposes, and the like with excellent productivity. Thus, the present invention has high industrial applicability in the food production field and all of its related industrial and technical fields.

### [Reference Signs List]

01 ... soybean-containing processed food raw material
02 ... soymilk
03 ... soybean flour
04 ... coagulated component
06 ... water-soluble component
08 ... component mixture
09 ... homogenate at the time of dough base preparation
1, 31 ... dough base
2, 22, 32 ... secondary material
3, 23, 33 ... secondary material mixture
10, 210, 310, 610 ... soybean-containing processed food
21 ... dough base(Tofu-like emulsion)
35 ... homogenate at the time of aftertreatment process
38 ... shaped product
65 ... mold structure for shaping
p610 ... soybean-containing processed food before removal from the mold structure
P10, P210, P310 ... dough base preparation process
P13 ... coagulation treatment step
P15 ... component separation step
P16 ... selective component mixing step
P18 ... selective homogenization step
P20, P220, P320 ... secondary material mixing process
P30, P230, P330 ... aftertreatment process
P38, P238, P338 ... heat treatment step
P335 ... selective secondary material mixture homogenization step
P336 ... shaping step
S100, S100X ... dough base preparation unit
S115X ... component separation part
S116X ... selective component mixing part
S200, S200X ... secondary material mixing unit
S300, S300X ... aftertreatment unit
S380, S380X ... heat treatment part
S1000, S1000X ... soybean-containing processed food production system

## Claims

1. A method for producing a soybean-containing processed food, comprising: a dough base preparation process of preparing a dough base that forms the basis of the soybean-containing processed food of interest; a secondary material mixing process of mixing a secondary material with the dough base obtained in the dough base preparation process; and an aftertreatment process of subjecting a secondary material mixture obtained by the secondary material mixing process to aftertreatment, the aftertreatment process comprising at least a heat treatment step for the secondary material mixture, wherein in component composition of the dough base, a lipid content is less than a protein content, and a solid content derived from the dough base that accounts for the resulting soybean-containing processed food is 25% by weight or more; and the dough base preparation process comprises a component separation step of separating a coagulated component resulting from soymilk coagulation treatment from a water-soluble component.

2. The method for producing a soybean-containing processed food according to claim 1, wherein the dough base preparation process comprises: a selective component mixing step of, if necessary, mixing the water-soluble component with the coagulated component separated in the component separation step to obtain a component mixture; and a selective homogenization step of, if necessary, subjecting the coagulated component or the component mixture obtained by the selective component mixing step, if performed, to homogenization treatment.

3. The method for producing a soybean-containing processed food according to claim 2, wherein in the selective component mixing step, the treatment is performed at a mixing ratio of 25% by weight or more and 100% by weight or less of the coagulated component and 0% by weight or more and 75% by weight or less of the water-soluble component such that a concentration of the coagulated component is a concentration suitable for obtaining the soybean-containing processed food of interest.

4. A method for producing a soybean-containing processed food, comprising: a dough base preparation process of preparing a dough base that forms the basis of the soybean-containing processed food of interest; a secondary material mixing process of mixing a secondary material with the dough base obtained in the dough base preparation process; and an aftertreatment process of subjecting a secondary material mixture obtained by the secondary material mixing process to aftertreatment, the aftertreatment process comprising at least a heat treatment step for the secondary material mixture, wherein in component composition of the dough base, a lipid content is less than a protein content, and a solid content derived from the dough base that accounts for the resulting soybean-containing processed food is 25% by weight or more; and in the dough base preparation process, a Tofu-like emulsion resulting from water extraction of soybean flour is obtained as the dough base.

5. The method for producing a soybean-containing processed food according to any of claims 1, 2, 3, and 4, wherein the heat treatment in the heat treatment step is any one of the following list <H>:
<H> baking with an oven, baking with a convection oven, baking with a steam oven, heat treatment with a drum dryer, boiling treatment by filling into a container or a package, retort treatment by filling into a container or a package, and other heat treatments (except for the baking with an oven, the baking with a convection oven, the baking with a steam oven, the heat treatment with a drum dryer, the boiling treatment by filling into a container or a package, and the retort treatment by filling into a container or a package).

6. The method for producing a soybean-containing processed food according to claim 5, wherein the aftertreatment process comprises a shaping step of shaping the secondary material mixture, and a shaped product obtained by the shaping step is subjected to the heat treatment in the heat treatment step.

7. The method for producing a soybean-containing processed food according to claim 6, wherein the aftertreatment process comprises a selective secondary material mixture homogenization step of, if necessary, subjecting the secondary material mixture to homogenization treatment, and a homogenate obtained by the selective secondary material mixture homogenization step, if performed, is subjected to the shaping treatment in the shaping step.

8. The method for producing a soybean-containing processed food according to any of claims 6 and 7, wherein the secondary material is any one or more of the following list <C>:
<C> soybean protein, plant proteins (except for the soybean protein), seasonings, food polysaccharides, vegetable powders, fruit powders, powders for confections, fish powders, dairy products, and oils and fats.

9. A soybean-containing processed food production system comprising: a dough base preparation unit that prepares a dough base that forms the basis of the soybean-containing processed food of interest; a secondary material mixing unit that mixes a secondary material with the dough base obtained in the dough base preparation unit; and an aftertreatment unit that subjects a secondary material mixture obtained by the secondary material mixing unit to aftertreatment, the aftertreatment unit comprising at least a heat treatment part for the secondary material mixture, wherein in the dough base preparation unit, the dough base is obtained in which a lipid content is less than a protein content, and a solid content derived from the dough base that accounts for the resulting soybean-containing processed food is 25% by weight or more.

10. The soybean-containing processed food production system according to claim 9, wherein the dough base preparation unit comprises a component separation part that separates a coagulated component resulting from soymilk coagulation treatment from a water-soluble component.

11. The soybean-containing processed food production system according to claim 10, wherein the dough base preparation unit comprises a selective component mixing part that, if necessary, mixes a water-soluble component with the coagulated component separated in the component separation part to obtain a component mixture.

12. A soybean-containing processed food produced by a soybean processed product production system according to any of claims 9, 10, and 11.

13. A soybean-containing processed food comprising a dough base made of soybeans as a raw material, and a secondary material mixed therewith, wherein in component composition of the dough base, a lipid content is less than a protein content, and a solid content derived from the dough base that accounts for the resulting soybean-containing processed food is 25% by weight or more; and the soybean-containing processed food is formed through heat treatment.

14. The soybean-containing processed food according to any of claims 12 and 13, wherein the soybean-containing processed food is shaped into a terrine de pate-like specific shape.

15. The soybean-containing processed food according to claim 14, wherein the soybean-containing processed food is any one of the following list <F>:
<F> high-protein foods, prepared foods, confectioneries, and spreads.

16. The soybean-containing processed food according to claim 15, wherein the soybean-containing processed food is a frozen food.
